# EUROPEAN PATENT APPLICATION

(11) **EP 4 806 543 A1**
(43) Date of publication of application: **16.09.2026**
(21) Application number: 26164454.6
(22) Date of filing: 12.03.2026
(51) Int. Cl.: B01D 69/10

(54) **GAS SEPARATION MEMBRANE AND GAS SEPARATION APPARATUS**

(30) Priority: 14.03.2025 JP 2025041051
(71) Applicant: Seiko Epson Corporation, Tokyo 160-8801 (JP)
(72) Inventor: NAKASHIMA, Taisuke, Suwa-shi, 392-8502 (JP)
(74) Representative: Lewis Silkin LLP

(57) **Abstract**

A gas separation membrane for permeating and separating a predetermined component from a mixed gas includes: a porous layer which is porous; a separation layer which is provided on one surface of the porous layer and is formed of a polymer material; and a to-beheld layer which is provided outside the separation layer on one surface of the porous layer, is thicker than the separation layer, and has a lower gas permeability of the predetermined component than the separation layer.

## Description

The present application is based on, and claims priority from JP Application Serial Number 2025-041051, filed March 14, 2025, the disclosure of which is hereby incorporated by reference herein in its entirety.

### BACKGROUND

### 1. Technical Field

The present disclosure relates to a gas separation membrane and a gas separation apparatus.

### 2. Related Art

In order to implement carbon neutrality or carbon minus, a technique is being considered to absorb and collect carbon dioxide discharged from thermal power plants, boiler facilities, or the like, and carbon dioxide in the atmosphere. As that technique, there has been known a membrane separation method of separating carbon dioxide using a gas separation membrane.

For example, JP-A-2010-137160 discloses a gas separation membrane module including a separation membrane that separates a supply gas into a permeated gas and a non-permeated gas, and a porous support that has an air permeability and supports the separation membrane, in which the support is configured such that an aperture ratio increases from a separation membrane side toward a permeation side.

JP-A-2010-137160 is an example of the related art.

In the gas separation membrane module described in JP-A-2010-137160, a separation membrane is sandwiched between two joining flanges, and a gap is sealed using an O-ring. Therefore, when a pressure difference occurs across the separation membrane, the separation membrane may be damaged. Therefore, an object is to implement a sealable gas separation membrane while preventing an occurrence of damage.

### SUMMARY

A gas separation membrane according to an application example of the present disclosure is a gas separation membrane for permeating and separating a predetermined component from a mixed gas. The gas separation membrane includes: a porous layer which is porous; a separation layer provided on one surface of the porous layer and formed of a polymer material; and a to-be-held layer provided outside the separation layer on one surface of the porous layer, thicker than the separation layer, and having a gas permeability of the predetermined component lower than a gas permeability of the predetermined component in the separation layer.

A gas separation apparatus according to an application example of the present disclosure includes: the gas separation membrane according to an application example of the present disclosure; a housing configured to hold the to-be-held layer to form an internal space located on a side opposite to an external space via the gas separation membrane; and an exhaust unit configured to reduce a pressure in the internal space such that the internal space has a negative pressure with respect to the external space.

### BRIEF DESCRIPTION OF THE DRAWINGS

FIG. 1 is a cross-sectional view illustrating a schematic configuration of a gas separation apparatus according to an embodiment.
FIG. 2 is a cross-sectional view schematically illustrating a gas separation membrane illustrated in FIG. 1.
FIG. 3 is a schematic view illustrating a method for measuring an average pore size in an observation image of a cross section of a porous layer.
FIG. 4 is a schematic view illustrating a method for measuring an aperture ratio in the observation image of the cross section of the porous layer.
FIG. 5 is a plan view of the gas separation membrane illustrated in FIG. 2 when viewed from a positive Z-axis side.
FIG. 6 is a cross-sectional view illustrating a gas separation membrane according to a first modification of the embodiment.
FIG. 7 is a cross-sectional view illustrating a gas separation membrane according to a second modification of the embodiment.
FIG. 8 is a cross-sectional view illustrating a gas separation apparatus according to a third modification of the embodiment.
FIG. 9 is a cross-sectional view illustrating a gas separation apparatus according to a fourth modification of the embodiment.
FIG. 10 is Table 1 illustrating configurations of gas separation membranes and evaluation results of the gas separation membranes in Examples and Comparative Examples.
FIG. 11 is a cross-sectional view illustrating a gas separation membrane in Comparative Examples 1 and 2.
FIG. 12 is a cross-sectional view illustrating a schematic configuration of a gas separation apparatus to which the gas separation membrane illustrated in FIG. 11 is assembled.

### DESCRIPTION OF EMBODIMENTS

Hereinafter, a gas separation membrane and a gas separation apparatus according to the present disclosure will be described in detail based on embodiments illustrated in the accompanying drawings.

### 1. Gas Separation Apparatus

First, a configuration of a gas separation apparatus according to the embodiment will be described.

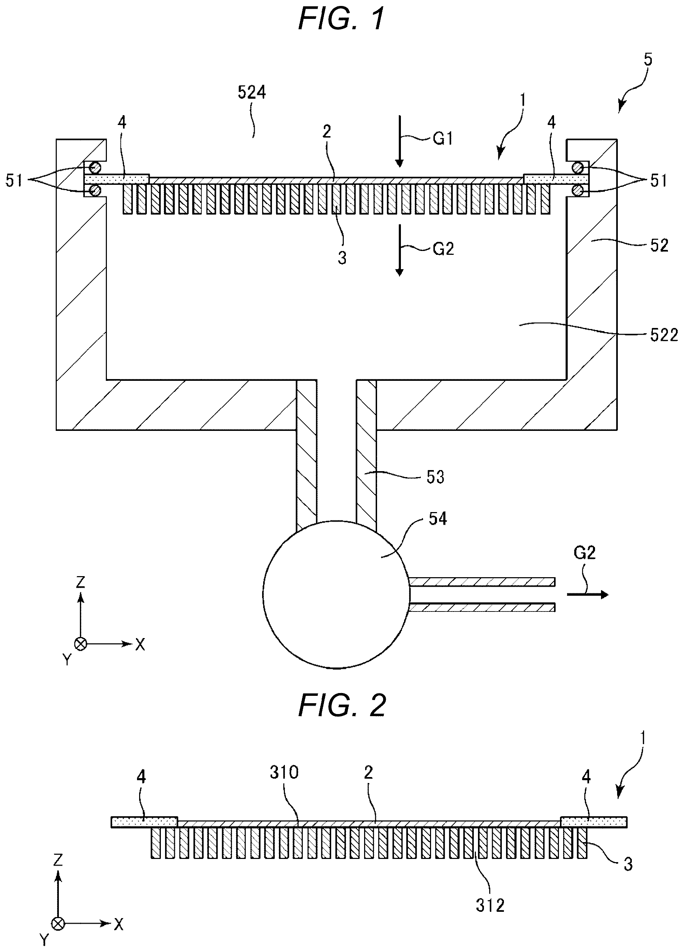

FIG. 1 is a cross-sectional view illustrating a schematic configuration of a gas separation apparatus 5 according to the embodiment. In each drawing of the present application, an X axis, a Y axis, and a Z axis are set as three axes orthogonal to one another, and are indicated by arrows. A base end of the arrow indicating each axis is designated as "negative" and a tip end thereof is designated as "positive".

The gas separation apparatus 5 illustrated in FIG. 1 includes a gas separation membrane 1 (gas separation membrane according to the embodiment), sealing portions 51, a housing 52, a pipe 53, and an exhaust unit 54. In FIG. 1, a positive Z-axis side of the gas separation membrane 1 is referred to as "upper", and a negative Z-axis side of the gas separation membrane 1 is referred to as "lower".

The gas separation membrane 1 separates a predetermined component from a mixed gas containing the predetermined component by allowing the predetermined component to permeate downstream. Examples of the predetermined component include acidic gases such as carbon dioxide (CO₂), hydrogen sulfide (H₂S), sulfur oxide (SOₓ), and nitrogen oxide (NOₓ), as well as oxygen molecules, water molecules, and radioactive substances. In the following description, a case where the predetermined component is carbon dioxide will be described as an example, but when the gas separation membrane 1 is used for a component other than carbon dioxide, the description in which carbon dioxide described below is replaced with the component can be applied as it is.

The sealing portions 51 sandwich the gas separation membrane 1 and isolates sides upstream and downstream of the gas separation membrane 1.

Examples of the sealing portion 51 include a packing such as an O-ring, and a gasket such as a soft gasket.

The housing 52 fixes the sealing portions 51. The housing 52 forms an internal space 522 downstream of a perforated plate 50.

A constituent material of the housing 52 is not particularly limited, and examples thereof include a resin material and a metal material.

The sides upstream and downstream of the gas separation membrane 1 can be airtightly separated by the sealing portions 51 and the housing 52.

The exhaust unit 54 exhausts gas in the internal space 522 via the pipe 53. Accordingly, the internal space 522 is set to have a negative pressure to form a differential pressure between the sides upstream and downstream of the gas separation membrane 1.

Examples of the exhaust unit 54 include a dry pump such as a screw pump and a scroll pump, an oil rotary pump, and a turbo molecular pump.

When such a differential pressure is formed, carbon dioxide contained in a mixed gas G1 supplied to an external space 524 passes through the gas separation membrane 1 and is collected as a permeated gas G2. The mixed gas G1 contains carbon dioxide and other gas components. The permeated gas G2 is a gas having a carbon dioxide concentration higher than a carbon dioxide concentration of the mixed gas G1. The carbon dioxide can be separated and collected from the mixed gas G1 by obtaining the permeated gas G2.

Such a gas separation apparatus 5 is useful in, for example, a technique of separating and collecting carbon dioxide contained in the atmosphere (direct air capture (DAC)).

A shape of the gas separation membrane according to the present disclosure may be a sheet shape (flat plate shape) illustrated in FIGS. 1 and 2, a spiral shape, a tubular shape, or a hollow fiber shape. In this case, a shape of the sealing portion 51 and the like may also be changed according to the shape of the gas separation membrane.

### 2. Overview of Gas Separation Membrane

Next, a configuration of the gas separation membrane according to the embodiment will be described.

FIG. 2 is a cross-sectional view schematically illustrating the gas separation membrane 1 illustrated in FIG. 1.

The gas separation membrane 1 illustrated in FIG. 2 includes a separation layer 2, a porous layer 3, and to-be-held layers 4.

The porous layer 3 is porous and has a sheet shape spreading along an X-Y plane.

The separation layer 2 is provided on an upper surface (one surface) of the porous layer 3 and is formed of a polymer material. The separation layer 2 has a function of allowing carbon dioxide to permeate.

The to-be-held layers 4 are provided outside the separation layer 2 on an upper surface of the porous layer 3. The to-be-held layer 4 is thicker than the separation layer 2 and has a gas permeability of carbon dioxide lower than a gas permeability of carbon dioxide in the separation layer 2.

The to-be-held layers 4 are sandwiched by the sealing portions 51 and incorporated into the gas separation apparatus 5. A thickness of the to-be-held layer 4 is set to be larger than a thickness of the separation layer 2. A gas permeability of carbon dioxide in the to-be-held layer 4 is set lower than the gas permeability of carbon dioxide in the separation layer 2. Therefore, the to-be-held layer 4 has mechanical strength higher than mechanical strength of the separation layer 2, and maintains airtightness and is less likely to be damaged even when the to-be-held layer 4 comes into contact with the sealing portion 51 or is subjected to a differential pressure while sandwiched between the sealing portions 51. Accordingly, the gas separation membrane 1 can be prevented from being damaged in the separation layer 2 and has high reliability.

### 2.1. Porous Layer

The porous layer 3 has a sheet shape and supports the separation layer 2 from a side downstream thereof. The porous layer 3 has a gas permeability higher than the gas permeability in the separation layer 2 and has mechanical strength higher than the mechanical strength of the separation layer 2. Accordingly, even when the separation layer 2 does not have sufficient mechanical properties, the porous layer 3 supports the separation layer 2, thereby implementing the gas separation membrane 1 having excellent mechanical properties.

The second porous layer 3 is formed of a porous material. The porous material includes a large number of pores 312 and has a good gas permeability.

Examples of the constituent material of the porous layer 3 include an inorganic porous material such as a porous ceramic material and a porous metal material, and an organic porous material such as a porous polymer material. The porous material may be a composite material obtained by combining these materials.

The inorganic porous material has excellent weather resistance. Therefore, the use of the inorganic porous material enhances the durability of the gas separation membrane 1.

The organic porous material has excellent flexibility and excellent moldability. Therefore, by using the organic porous material, impact resistance of the gas separation membrane 1 can be enhanced, and a degree of freedom in shape can be improved.

Examples of the ceramic material include alumina, cordierite, mullite, silicon carbide, silicon oxide, and zirconia.

Examples of the metal material include stainless steel, a copper alloy, an aluminum alloy, and a titanium alloy.

Examples of the polymer material include polyolefin resins such as polyethylene and polypropylene, fluorine-containing resins such as polytetrafluoroethylene, polyvinyl fluoride and polyvinylidene fluoride, polystyrene, cellulose, cellulose acetate, cellulose nitrate, polycarbonate, polyurethane, polyacrylonitrile, polyphenylene oxide, polysulfone, polyethersulfone, polyimide, polyaramid, nylon, and polysiloxane.

The porous layer 3 may be a filter having an open cell structure. The filter having an open cell structure is also called an absolute-type filter, and includes the pores 312 that are continuous from one surface to the other surface that are in a front-back relationship with each other and are independent from each other.

A layer thickness of the porous layer 3 is preferably 5 µm or more and 300 µm or less, more preferably 10 µm or more and 200 µm or less, and still more preferably 30 µm or more and 100 µm or less. When the layer thickness is within the above range, the porous layer 3 having a good gas permeability and necessary and sufficient mechanical strength can be obtained.

When the layer thickness of the porous layer 3 falls below the above lower limit value, mechanical strength of the porous layer 3 may be reduced, and damage or the like may occur. In this case, the separation layer 2 cannot be sufficiently supported by the porous layer 3, and a gas selectivity ratio of the gas separation membrane 1 may decrease. On the other hand, when the layer thickness of the porous layer 3 exceeds the above upper limit value, a pressure loss when a gas passes through the pores 312 in the porous layer 3 increases, and a gas permeability of the porous layer 3 may decrease.

The layer thickness of the porous layer 3 is determined as follows. First, a cross section of the porous layer 3 is processed by focused ion beam processing or the like. Next, the obtained cross section is observed with a scanning electron microscope (SEM) or a scanning transmission electron microscope (STEM). Next, a range of the porous layer 3 is extracted based on a contrast of an observation image. Next, the thickness of the extracted porous layer 3 is measured at five locations. An average value of the measured thicknesses is defined as the layer thickness of the porous layer 3.

An average pore size of the porous layer 3 is preferably 10 nm or more and 10,000 nm or less, more preferably 20 nm or more and 1,000 nm or less, and still more preferably 30 nm or more and 500 nm or less. When the average pore size is within the above range, the porous layer 3 having a good gas permeability and necessary and sufficient mechanical strength can be obtained. When the separation layer 2 moderately penetrates into the pores 312 of the porous layer 3, adhesion and coverage of the separation layer 2 are enhanced. As a result, the gas selectivity ratio of the separation layer 2 is increased.

When the average pore size of the porous layer 3 falls below the above lower limit value, a pressure loss when a gas passes through the pores 312 in the porous layer 3 increases, and the gas permeability of the porous layer 3 may decrease. When the permeation of the separation layer 2 is prevented, the gas selectivity ratio of the separation layer 2 may decrease. On the other hand, when the average pore size of the porous layer 3 exceeds the above upper limit value, the mechanical strength of the porous layer 3 may decrease, and the damage or the like may occur. In this case, the separation layer 2 cannot be sufficiently retained by the porous layer 3, and the gas selectivity ratio of the gas separation membrane 1 may decrease. Since the retention of the separation layer 2 decreases, coverage of the separation layer 2 may decrease and the separation layer 2 may become more susceptible to damage.

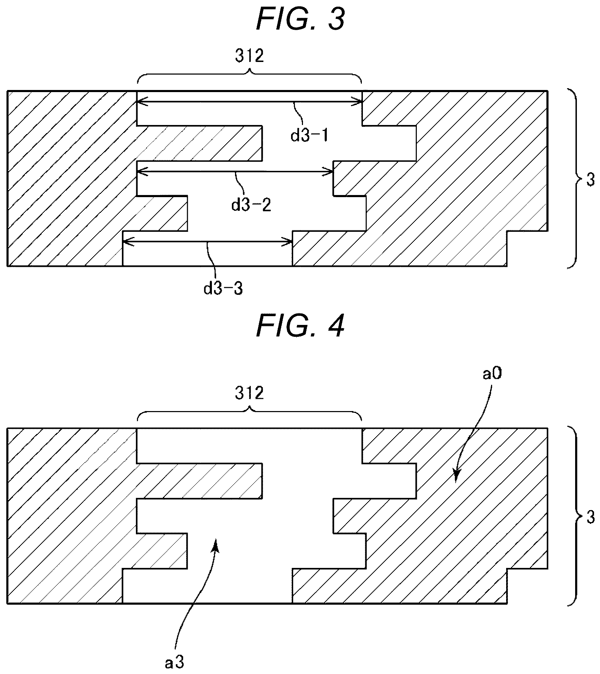

The average pore size of the porous layer 3 is obtained as follows. FIG. 3 is a schematic view illustrating a method for measuring the average pore size in an observation image of a cross section of the porous layer 3.

First, a cross section of the porous layer 3 is processed by focused ion beam processing or the like. Next, the obtained cross section is observed with a scanning electron microscope (SEM) or a scanning transmission electron microscope (STEM). FIG. 3 is an example of the observation image obtained in this manner. Next, based on the contrast of the observation image, the range of the porous layer 3 and the pores 312 penetrating through that range in a thickness direction are extracted. Next, inner diameters of the extracted pores 312 at three positions in the thickness direction (an inner diameter d3-1 closest to the separation layer 2, an inner diameter d3-2 at a central portion, and an inner diameter d3-3 closest to the internal space 522) are measured. Next, inner diameters of five pores 312 are similarly measured. An average value of the obtained 15 pieces of data is defined as the average pore size of the porous layer 3.

An aperture ratio of the porous layer 3 is preferably 40% or more and 80% or less, and more preferably 50% or more and 70% or less. When the aperture ratio is within the above range, the porous layer 3 having a good gas permeability and necessary and sufficient mechanical strength can be obtained.

When the aperture ratio of the porous layer 3 falls below the above lower limit value, a pressure loss when a gas passes through the pores 312 in the porous layer 3 increases, and the gas permeability in the porous layer 3 may decrease. On the other hand, when the aperture ratio of the porous layer 3 exceeds the above upper limit value, the mechanical strength of the porous layer 3 may decrease, and the damage or the like may occur. In this case, the separation layer 2 cannot be stably supported by the porous layer 3, and the gas selectivity ratio of the gas separation membrane 1 may decrease.

The aperture ratio of the porous layer 3 is obtained as follows. FIG. 4 is a schematic diagram illustrating a method for measuring the aperture ratio in an observation image of a cross section of the porous layer 3.

First, the cross section of the porous layer 3 is processed by focused ion beam processing or the like. Next, the obtained cross section is observed with a scanning electron microscope (SEM) or a scanning transmission electron microscope (STEM). FIG. 4 is an example of the observation image obtained in this manner. Next, after binarization processing is performed on the observation image, the range of the porous layer 3 and the pores 312 penetrating through that range in the thickness direction are extracted based on the contrast. Next, in the observation image, an area a3 of the pore 312 and an area a0 of the porous layer 3 other than the pore 312 are measured. An area ratio is calculated by a calculation formula a3/a0 × 100, and a calculation result is defined as the aperture ratio of the porous layer 3.

A maximum height roughness of an upper surface 310 of the porous layer 3 (surface facing the separation layer 2) is preferably 1 nm or more and 200 nm or less, more preferably 3 nm or more and 150 nm or less, and still more preferably 5 nm or more and 120 nm or less. When the maximum height roughness of the upper surface 310 is within the above range, the coverage of the separation layer 2 can be sufficiently increased. An increase in difficulty in forming the porous layer 3 can be prevented. When the maximum height roughness of the upper surface 310 of the porous layer 3 falls below the above lower limit value, the difficulty in forming the porous layer 3 may increase. On the other hand, when the maximum height roughness of the upper surface 310 of the porous layer 3 exceeds the above upper limit value, continuity of the separation layer 2 formed on the upper surface 310 is impaired, and the coverage of the separation layer 2 may decrease.

The maximum height roughness of the upper surface 310 of the porous layer 3 is obtained as follows.

First, the porous layer 3 is set in a surface roughness measuring apparatus such that the upper surface 310 of the porous layer 3 serves as an observation target surface. For example, a laser microscope equipped with a white light interferometer is used as the measuring apparatus. Examples of such a laser microscope include VK-X3000 manufactured by Keyence Corporation. A shape of the upper surface 310 is scanned at a magnification of 50 times. Accordingly, an image including information on an uneven shape of the upper surface 310 is acquired. Next, in the image, a highest point and a lowest point are specified in a range excluding the pores 312 of the porous layer 3. Next, a height difference between the two points is calculated and the height difference is set as the maximum height roughness. That is, a maximum height difference is obtained in a portion excluding the pores 312 based on a measurement result of the uneven shape of the upper surface 310, and the maximum height difference is set as the maximum height roughness.

### 2.2. Separation Layer

The separation layer 2 is provided on the upper surface 310 of the porous layer 3. The separation layer 2 has a function of separating a predetermined component such as carbon dioxide by allowing the predetermined component to permeate therethrough.

A constituent material of the separation layer 2 is a polymer material. Examples of the polymer material include polyolefin resins such as polyethylene and polypropylene, fluorine-containing resins such as polytetrafluoroethylene, polyvinyl fluoride, and polyvinylidene fluoride, polystyrene, cellulose, cellulose acetate, polyurethane, polyacrylonitrile, polyphenylene oxide, polysulfone, polyethersulfone, polyimide, polyaramid, organopolysiloxane, polyethylene terephthalate (PET), polyacetal (POM), and polylactic acid (PLA). The constituent material of the separation layer 2 may be a composite material of two or more of these materials.

Among them, an organopolysiloxane is preferably used as the constituent material of the separation layer 2. One molecule of the organopolysiloxane includes at least a unit (a T unit) represented by R¹SiO_{3/2}, a unit (a D unit) represented by R²R³SiO_{2/2}, and a unit (an M unit) represented by R⁴R⁶R⁶SiO_{1/2} as a basic constituent unit. In each unit, R¹ to R⁶ are an aliphatic hydrocarbon or a hydrogen atom. The organopolysiloxane is formed by combining the T unit, the D unit, and the M unit.

Specific examples of the organopolysiloxane include polydimethylsiloxane, polymethylphenylsiloxane, polydiphenylsiloxane, a polysulfone/polyhydroxystyrene/polydimethylsiloxane copolymer, a dimethylsiloxane/methylvinylsiloxane copolymer, a dimethylsiloxane/diphenylsiloxane/methylvinylsiloxane copolymer, a methyl-3,3,3-trifluoropropylsiloxane/methylvinylsiloxane copolymer, a dimethylsiloxane/methylphenylsiloxane/methylvinylsiloxane copolymer, vinyl terminated diphenylsiloxane/dimethylsiloxane copolymer, vinyl terminated polydimethylsiloxane, amino terminated polydimethylsiloxane, phenyl terminated polydimethylsiloxane, H terminated polydimethylsiloxane, and a dimethylsiloxane-methylhydrosiloxane copolymer. The expression "vinyl terminated" or the like indicates that at least one end of a principal chain contained in the organopolysiloxane is substituted with a substituent such as a vinyl group. This includes a form in which a crosslinking reactant is formed. The constituent material of the separation layer 2 may be one kind or a composite of two or more kinds thereof, or may be a composite material containing an organopolysiloxane as a main component in mass ratio and other resin components in combination.

The organopolysiloxane has a good affinity for carbon dioxide. Therefore, the separation layer 2 containing organopolysiloxane exhibits a high gas selectivity ratio to carbon dioxide.

If necessary, any functional group may be introduced into an upstream surface of the separation layer 2 using a coupling agent or the like. By appropriately selecting the functional group, the affinity for carbon dioxide can be further increased.

A layer thickness of the separation layer 2 is not particularly limited, and is preferably 1 nm or more and 1,000 nm or less, more preferably 2 nm or more and 500 nm or less, further preferably 3 nm or more and 100 nm or less, and particularly preferably 5 nm or more and 50 nm or less. Accordingly, the separation layer 2 has a good gas selectivity ratio and a good gas permeability. As a result, the gas separation membrane 1 that can reduce an input amount of energy required for separating carbon dioxide, specifically, that can reduce a pressure difference between the sides upstream and downstream of the gas separation membrane 1 can be implemented. When the layer thickness of the separation layer 2 falls below the above lower limit value, the coverage of the separation layer 2 may decrease or the separation layer 2 may be easily damaged, and the gas selectivity ratio of the separation layer 2 may decrease. On the other hand, when the layer thickness of the separation layer 2 exceeds the above upper limit value, the gas permeability in the separation layer 2 may decrease, the input amount of energy required for separation may increase, and flexibility of the separation layer 2 may decrease.

The layer thickness of the separation layer 2 can be obtained, for example, by observing a cross section of the gas separation membrane 1 under magnification and averaging thicknesses at 10 locations. For the magnification observation, for example, a scanning electron microscope (SEM), or a scanning transmission electron microscope (STEM) is used. The thickness of the separation layer 2 may be measured by depth direction analysis using X-ray photoelectron spectroscopy, and the measured value may be set as the layer thickness of the separation layer 2.

The gas permeability of carbon dioxide in the separation layer 2 is preferably 5,000 × 10⁻⁶ cm³ (STP)/cm²•sec•cmHg or more (5,000 GPU or more), and more preferably 10,000 GPU or more. Accordingly, the gas separation membrane 1 having high carbon dioxide separation efficiency can be obtained. The gas separation membrane 1 that can reduce an input amount of energy required for separation, specifically, that can reduce a pressure difference between the sides upstream and downstream of the gas separation membrane 1 can be implemented.

The gas permeability of carbon dioxide in the separation layer 2 is measured by the following method.

First, the gas separation membrane 1 is cut into a circle having a diameter of 5 cm to prepare a test sample. Next, carbon dioxide is supplied to a side upstream of the test sample using a gas permeability measurement apparatus. At this time, a total upstream pressure is adjusted to 1.2 atm, a flow rate of carbon dioxide is adjusted to 500 mL/min, and a temperature is adjusted to 40°C. The gas permeability is measured according to a gas permeability test method (Part 1: differential pressure method) specified in JIS K 7126-1:2006. As the gas permeability measurement apparatus, for example, GTR-11A/31A manufactured by GTR Tech Co., Ltd. is used. In the apparatus, gas that permeates the test sample is introduced into a gas chromatograph, and the gas permeability of each component is measured.

Next, the gas permeability of carbon dioxide in the gas separation membrane 1 is calculated from the analysis result.

Next, the gas permeability of carbon dioxide in the porous layer 3 measured in advance is subtracted from the calculated gas permeability of carbon dioxide in the gas separation membrane 1. Accordingly, the gas permeability of carbon dioxide in the separation layer 2 is obtained.

### 2.3. To-be-held Layer

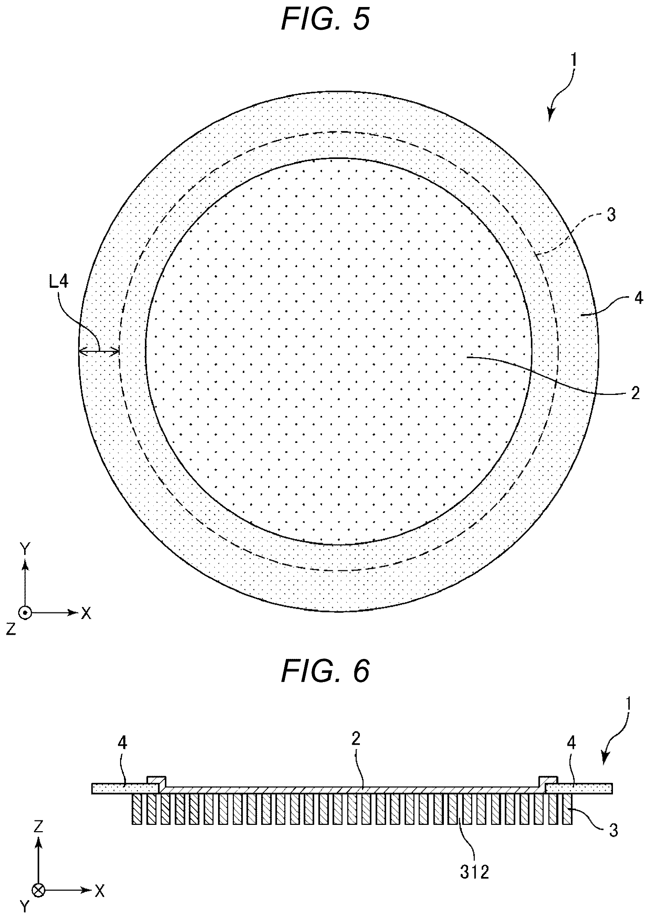

FIG. 5 is a plan view of the gas separation membrane 1 illustrated in FIG. 2 when viewed from a positive Z-axis side.

The gas separation membrane 1 illustrated in FIG. 5 has a circular shape. The shape of the gas separation membrane 1 is not limited to a circular shape, and may be other shapes.

The to-be-held layer 4 illustrated in FIG. 5 has an annular shape surrounding the circular separation layer 2. Accordingly, the gas separation membrane 1 can be fixed to the housing 52 while avoiding contact between the sealing portions 51 and the separation layer 2 by sandwiching the to-be-held layer 4 with the sealing portions 51. Since the to-be-held layer 4 is thicker than the separation layer 2 and has a gas permeability of carbon dioxide lower than the gas permeability of carbon dioxide in the separation layer 2, the to-be-held layer 4 has mechanical strength and gas shielding properties higher than those of the separation layer 2. Therefore, by sandwiching the to-be-held layer 4 with the sealing portions 51, the sides upstream and downstream thereof can be separated via the separation layer 2 while preventing damage of the separation layer 2. Accordingly, the gas separation membrane 1 can maintain the gas separation ability for a long period of time, and has excellent durability.

In a plan view of the to-be-held layer 4 from the positive Z-axis side, the to-be-held layer 4 illustrated in FIG. 5 protrudes outward beyond an outer edge of the porous layer 3. According to such a configuration, only the to-be-held layer 4 can be sealed with the sealing portions 51. Accordingly, for example, the porous layer 3 is not sealed together with the to-be-held layer 4, and therefore the porous layer 3 can be prevented from being damaged due to sealing.

When the porous layer 3 has sufficient mechanical strength and a gas permeability in the vicinity of the outer edge of the porous layer 3 is sufficiently low, the to-be-held layer 4 may not protrude from the outer edge of the porous layer 3.

A protruding length L4 of the to-be-held layer 4 is preferably 3 mm or more and 100 mm or less, more preferably 5 mm or more and 50 mm or less, and still more preferably 7 mm or more and 30 mm or less. When the protruding length L4 is within the above range, a length sufficient for sealing by the sealing portions 51 can be ensured, and an area that does not contribute to the gas separation ability can be kept small. The protruding length L4 is an average value obtained by measuring a distance from the outer edge of the porous layer 3 to an outer edge of the to-be-held layer 4 at any ten locations.

A layer thickness of the to-be-held layer 4 may be larger than the layer thickness of the separation layer 2, and is preferably 10 times or more, more preferably 100 times or more, and still more preferably 500 times or more the layer thickness of the separation layer 2. Accordingly, the gas permeability in the to-be-held layer 4 is sufficiently reduced, and the mechanical strength thereof is sufficiently increased. On the other hand, from the viewpoint of flexibility of the to-be-held layer 4, sealability by the sealing portions 51, and the like, the layer thickness of the to-be-held layer 4 is preferably 10,000 times or less, and more preferably 5,000 times or less the layer thickness of the separation layer 2.

The layer thickness of the to-be-held layer 4 is within the above range, and particularly, is preferably 5 µm or more and 500 µm or less, more preferably 7 µm or more and 300 µm or less, and still more preferably 10 µm or more and 100 µm or less. Accordingly, the to-be-held layer 4 having a low gas permeability, high strength, and flexibility can be obtained.

The gas permeability of carbon dioxide in the to-be-held layer 4 may be lower than the gas permeability of carbon dioxide in the separation layer 2, and is preferably 10% or less, more preferably 1% or less of the gas permeability of carbon dioxide in the separation layer 2. The to-be-held layer 4 having such a gas permeability hardly contains pores, and thus has sufficient gas shielding properties. Therefore, the flow of carbon dioxide through the to-be-held layer 4 can be prevented, and the gas selectivity ratio in the gas separation apparatus 5 can be sufficiently increased.

The gas permeability of carbon dioxide in the to-be-held layer 4 is measured in the same manner as the gas permeability of carbon dioxide in the separation layer 2 using a circular test sample having a diameter of 5 cm, which is prepared using the same member as the to-be-held layer 4.

Examples of the to-be-held layer 4 include films (resin films) of various resin materials such as polyolefins such as low-density polyethylene (LDPE), high-density polyethylene (HDPE), and polypropylene (PP), polyesters such as polyethylene terephthalate (PET) and polyethylene naphthalate (PEN), polyamides such as nylon, acrylic resins, polyvinylidene chloride, and fluororesins. These resin films are easily available, have a low gas permeability, and have particularly good high strength and flexibility.

In the present specification, low-density polyethylene refers to polyethylene having a density of 0.94 g/cm³ or less, and high-density polyethylene refers to polyethylene having a density of more than 0.94 g/cm³.

Among them, a polyolefin film, a polyester film, or a polyamide film is preferably used for the to-be-held layer 4, and a LDPE film, an HDPE film, a polypropylene film, or polyethylene terephthalate is more preferably used. These have a good low gas permeability, high strength, and flexibility, and are easily available.

The to-be-held layer 4 may be a multilayer resin film formed by laminating two or more types of the resin films described above.

For adhesion between the to-be-held layer 4 and the porous layer 3, for example, an adhesive, a pressure sensitive adhesive, thermal welding, solvent welding, or the like can be used.

On the other hand, examples of the other to-be-held layer 4 include metal films such as a metal foil, a metal foil with a pressure-sensitive adhesive, and a resin film with a metal film. These have a low gas permeability, high strength, and high weather resistance.

A metal material contained in the metal film is not particularly limited as long as it is a material containing a metal element. The "metal element" in the present specification also includes elements belonging to metalloids such as Si, Ge, and C.

Among them, a simple substance containing Al, Cu, Cr, Ti, Zn, Fe, or Si, an alloy containing these elements, or a compound containing these elements is preferably used as the metal material contained in the metal film. These have a particularly low gas permeability, particularly high strength, and high weather resistance.

Examples of the metal film include an aluminum tape, which is aluminum foil with an adhesive layer applied thereto, and a stainless steel tape, which is stainless steel foil with an adhesive layer applied thereto.

A Young's modulus of the to-be-held layer 4 is not particularly limited, and is preferably 5 MPa or more and 6,000 MPa or less, and more preferably 10 MPa or more and 5,000 MPa or less. When the Young's modulus of the to-be-held layer 4 is within the above range, both the deformation resistance and the flexibility of the to-be-held layer 4 can be achieved.

When the Young's modulus of the to-be-held layer 4 falls below the above lower limit value, in a case where the gas separation membrane 1 is subjected to a differential pressure, the elongation of the to-be-held layer 4 may become excessively large. On the other hand, when the Young's modulus of the to-be-held layer 4 exceeds the above upper limit value, the brittleness of the to-be-held layer 4 may increase.

The Young's modulus of the to-be-held layer 4 is a tensile elastic modulus E calculated from a tensile load and an elongation ratio (strain) measured by a method specified in JIS A 6008: 2022. The tensile elastic modulus E is measured, for example, as follows.

First, a test piece of a constituent material of the to-be-held layer 4 is prepared. The tensile elastic modulus E is obtained by E = (F/S)/ε, where S is a cross-sectional area of the test piece before the tensile test, F is the tensile load, and ε is the elongation ratio when the tensile load F is applied. The elongation ratio ε is obtained by ε = ΔL/L0, where L0 is a length of the test piece before the tensile load F is applied, and ΔL is an elongation when the tensile load F is applied. Here, the tensile load F when the elongation ratio ε from the initial state is 1.5% is measured, and the tensile elastic modulus E is calculated from the measured value. The measurement conditions are a temperature of 20°C, a relative humidity of 50%±10%, and a test speed of 200 mm/min. For the test piece, fragments are used that are cut out from an original roll of the constituent material, three each in a longitudinal direction and a width direction. The tensile elastic modulus E is calculated for a total of six test pieces cut out from the original roll, and an average value thereof is used as the Young's modulus.

An arithmetic average height Ra of the surface of the to-be-held layer 4 is preferably 5 nm or more and 200 nm or less, more preferably 10 nm or more and 150 nm or less, and still more preferably 15 nm or more and 100 nm or less. When the arithmetic average height Ra of the surface of the to-be-held layer 4 is within the above range, the sealing property is enhanced when the to-be-held layer 4 is sealed with the sealing portions 51.

The arithmetic average height Ra of the surface of the to-be-held layer 4 is an arithmetic average height Ra of a contour curve defined in JIS B 0601: 2001, and is measured using, for example, a laser microscope. After the arithmetic average height Ra is measured for each of both surfaces of the to-be-held layer 4, an average value thereof is adopted as the arithmetic average height Ra of the surface of the to-be-held layer 4.

### 3. Modification

Next, modifications of the gas separation apparatus and the gas separation membrane according to the embodiment will be described.

### 3.1. First Modification

FIG. 6 is a cross-sectional view illustrating the gas separation membrane 1 according to a first modification of the embodiment.

The first modification will hereinafter be described, but in the following description, differences from the embodiment described above will mainly be described, and description of similar matters will be omitted. In FIG. 6, configurations same as those in the above-described embodiment are denoted by the same reference numerals.

The first modification is the same as the above-described embodiment except that the disposition of the separation layer 2 is different.

The separation layer 2 illustrated in FIG. 6 overlaps a part of the to-be-held layer 4. That is, a connection portion between the separation layer 2 and the to-be-held layer 4 is formed by a laminate of the two. According to such a configuration, gas leakage at the connection portion can be more reliably prevented. As a result, the gas selectivity ratio of the gas separation membrane 1 can be further increased.

The separation layer 2 may overlap the entire to-be-held layer 4, and preferably, as illustrated in FIG. 6, the separation layer 2 does not overlap a vicinity of an outer edge of the to-be-held layer 4. According to such a configuration, a portion of the to-be-held layer 4 where the separation layer 2 does not overlap (a portion where the to-be-held layer 4 is present alone) can be sealed with the sealing portions 51. Accordingly, it is not necessary to seal the separation layer 2 with the sealing portions 51, and thus damage to the separation layer 2 can be prevented. Although the separation layer 2 overlapping the to-be-held layer 4 does not affect the gas separation ability even when the separation layer 2 is damaged, it is preferable that the separation layer 2 is configured as described above in consideration of the possibility that the breakage progresses.

In the first modification as described above, the effects same as those of the above-described embodiment can be obtained.

### 3.2. Second Modification

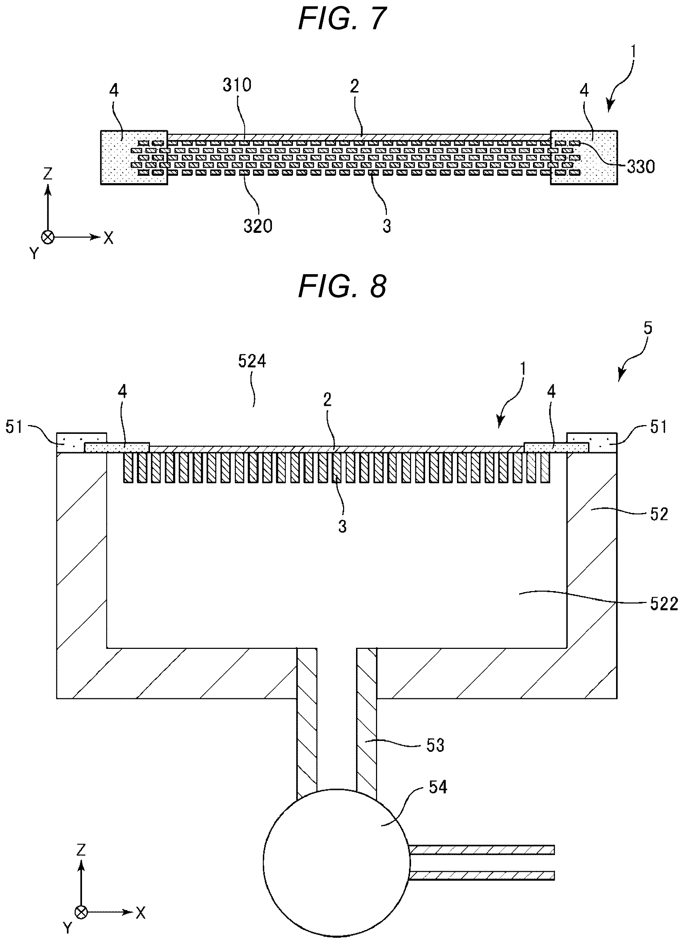

FIG. 7 is a cross-sectional view illustrating the gas separation membrane 1 according to a second modification of the embodiment.

The second modification will hereinafter be described, but in the following description, differences from the embodiment described above will mainly be described, and description of similar matters will be omitted. In FIG. 7, configurations same as those in the above-described embodiment are denoted by the same reference numerals.

The second modification is the same as the above-described embodiment except that the configuration of the porous layer 3 and the disposition of the to-be-held layer 4 are different.

The to-be-held layer 4 illustrated in FIG. 7 is disposed to cover an end portion of the porous layer 3. Specifically, the to-be-held layer 4 is disposed to cover the porous layer 3, extending from the upper surface 310, down along a side surface 330, and reaching a lower surface 320. According to such a configuration, not only the function of holding (sealing) the to-be-held layer 4 with the sealing portions 51 but also the function of sealing the side surface 330 of the porous layer 3 can be provided. Accordingly, as illustrated in FIG. 7, in a case where the side surface 330 of the porous layer 3 has an air permeability, for example, even when the porous layer 3 contains pores extending in random directions, as in a membrane filter, unintentional gas leakage through the side surface 330 can be prevented. As a result, the gas selectivity ratio of the gas separation membrane 1 can be further increased.

In the second modification as described above, the effects same as those of the above-described embodiment can be obtained.

### 3.3. Third Modification

FIG. 8 is a cross-sectional view illustrating the gas separation apparatus 5 according to a third modification of the embodiment.

The third modification will hereinafter be described, but in the following description, differences from the embodiment described above will mainly be described, and description of similar matters will be omitted. In FIG. 8, configurations same as those in the above-described embodiment are denoted by the same reference numerals.

The third modification is the same as the above-described embodiment except that the configuration of the sealing portion 51 is different.

The sealing portion 51 illustrated in FIG. 8 sandwiches and seals the to-be-held layer 4 with an upper surface of the housing 52. The sealing portion 51 is formed of, for example, an adhesive tape, an adhesive, or a potting resin. The sealing portion 51 may be formed of a molten material obtained by melting the to-be-held layer 4 by heat. In this case, the sealing portion 51 can be formed by heat welding a part of the to-be-held layer 4 to the housing 52.

In the third modification as described above, the effects same as those of the above-described embodiment can be obtained.

### 3.4. Fourth Modification

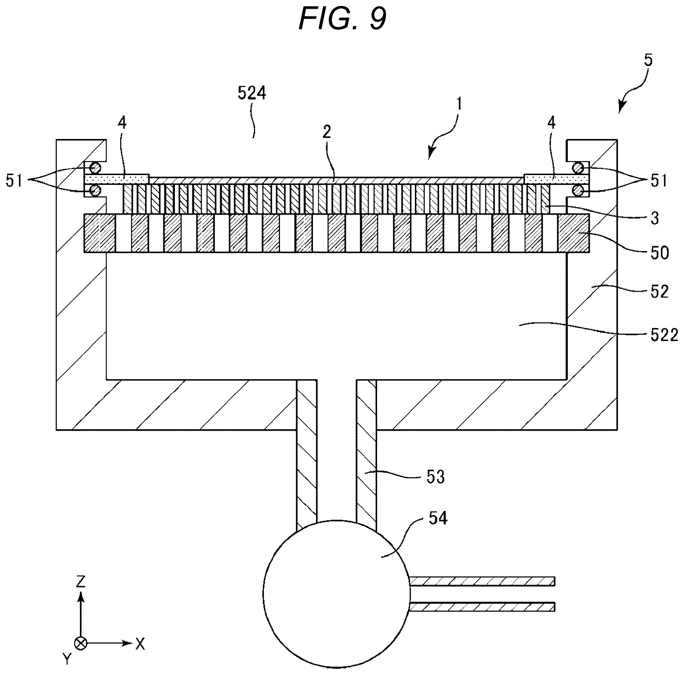

FIG. 9 is a cross-sectional view illustrating the gas separation apparatus 5 according to a fourth modification of the embodiment.

The fourth modification will hereinafter be described, but in the following description, differences from the embodiment described above will mainly be described, and description of similar matters will be omitted. In FIG. 9, configurations same as those in the above-described embodiment are denoted by the same reference numerals.

The fourth modification is the same as the above-described embodiment except that the perforated plate 50 is added.

The gas separation apparatus 5 illustrated in FIG. 9 further includes the perforated plate 50 in which a large number of through holes are formed. The perforated plate 50 is provided on an internal space 522 side of the gas separation membrane 1 and supports the gas separation membrane 1 from a side downstream thereof.

By providing such a perforated plate 50, deformation of the gas separation membrane 1 when subjected to a pressure difference can be prevented. Accordingly, damage to the gas separation membrane 1 due to deformation can be prevented.

The perforated plate 50 is preferably thicker than the porous layer 3. According to such a configuration, the mechanical strength of the perforated plate 50 can be increased, and the gas separation membrane 1 can be satisfactorily supported.

A thickness of the perforated plate 50 may be larger than a thickness of the porous layer 3, and is preferably twice or more, and more preferably five times or more the thickness of the porous layer 3. On the other hand, considering the resistance of the gas passing through the perforated plate 50, the thickness of the perforated plate 50 is preferably 100 times or less the thickness of the porous layer 3.

An aperture ratio of the perforated plate 50 is preferably higher than an aperture ratio of the porous layer 3. According to such a configuration, the gas separation membrane 1 can be supported without impairing the gas separation ability of the gas separation membrane 1.

The aperture ratio of the perforated plate 50 may be higher than the aperture ratio of the porous layer 3, and is preferably 1.1 times or more, and more preferably 1.3 times or more the aperture ratio of the porous layer 3. On the other hand, considering the mechanical strength and the like of the perforated plate 50, the aperture ratio of the perforated plate 50 is preferably 3.0 times or less the aperture ratio of the porous layer 3.

Examples of the constituent material of the perforated plate 50 include a ceramic material, a metal material, and a polymer material. The constituent material of the perforated plate 50 may be a composite material of these materials and other materials.

In the fourth modification as described above, the effects same as those of the above-described embodiment can be obtained.

### 4. Effects of Embodiment

The gas separation membrane 1 according to the embodiment is a gas separation membrane that separates carbon dioxide (predetermined component) from a mixed gas by allowing carbon dioxide to permeate therethrough, and includes the porous layer 3, the separation layer 2, and the to-be-held layer 4. The porous layer 3 is porous. The separation layer 2 is provided on an upper surface (one surface) of the porous layer 3 and is formed of a polymer material. The to-be-held layer 4 is provided outside the separation layer 2 on the upper surface of the porous layer 3, is thicker than the separation layer 2, and has a gas permeability of carbon dioxide lower than a gas permeability of carbon dioxide in the separation layer 2.

According to such a configuration, the sealable gas separation membrane 1 can be obtained while preventing the occurrence of damage.

In the gas separation membrane 1 according to the embodiment, the to-be-held layer 4 may protrude outward beyond the outer edge of the porous layer 3 in a plan view of the to-be-held layer 4.

According to such a configuration, only the to-be-held layer 4 can be sealed with the sealing portions 51. Accordingly, for example, the porous layer 3 is not sealed together with the to-be-held layer 4, and therefore the porous layer 3 can be prevented from being damaged due to sealing.

In the gas separation membrane 1 according to the embodiment, the separation layer 2 may overlap a part of the to-be-held layer 4.

According to such a configuration, gas leakage at the connection portion between the separation layer 2 and the to-be-held layer 4 can be more reliably prevented. As a result, the gas selectivity ratio of the gas separation membrane 1 can be further increased.

In the gas separation membrane 1 according to the embodiment, the to-be-held layer 4 may be formed of a resin film.

According to such a configuration, since the resin film is easily available, the gas permeability is low, and the high strength and the flexibility are particularly good, the gas separation membrane 1 useful in such a viewpoint can be obtained.

In the gas separation membrane 1 according to the embodiment, the to-be-held layer 4 may be formed of a metal film.

According to such a configuration, since the gas permeability in the metal film is low and high strength and high weather resistance are provided, the gas separation membrane 1 useful in such a viewpoint can be obtained.

In the gas separation membrane 1 according to the embodiment, the Young's modulus of the to-be-held layer 4 is preferably 5 MPa or more and 6,000 MPa or less.

According to such a configuration, both the deformation resistance and the flexibility of the to-be-held layer 4 can be achieved.

In the gas separation membrane 1 according to the embodiment, the arithmetic average height Ra of the surface of the to-be-held layer 4 is preferably 5 nm or more and 200 nm or less.

According to such a configuration, when the to-be-held layer 4 is sealed with the sealing portions 51, the sealability is enhanced.

In the gas separation membrane 1 according to the embodiment, the constituent material of the porous layer 3 may be an organic porous material.

According to such a configuration, since the organic porous material is excellent in flexibility and moldability, the impact resistance of the gas separation membrane 1 can be increased and the degree of freedom in shape can be improved.

In the gas separation membrane 1 according to the embodiment, the constituent material of the porous layer 3 may be an inorganic porous material.

According to such a configuration, since the inorganic porous material has excellent weather resistance, the durability of the gas separation membrane 1 can be enhanced.

In the gas separation membrane 1 according to the embodiment, the predetermined component is preferably carbon dioxide.

Accordingly, for example, the gas separation membrane 1 useful for the direct air capture (DAC) can be obtained.

The gas separation apparatus 5 according to the embodiment includes the gas separation membrane 1 according to the embodiment, the housing 52, and the exhaust unit 54. The housing 52 holds the to-be-held layer 4 to form the internal space 522 located on the side opposite to the external space 524 via the gas separation membrane 1. The exhaust unit 54 reduces a pressure in the internal space 522 such that the internal space 522 has a negative pressure with respect to the external space 524.

According to such a configuration, the gas separation apparatus 5 that separates the predetermined component from the mixed gas is obtained while preventing the occurrence of breakage of the gas separation membrane 1.

The gas separation apparatus 5 according to the embodiment may further include the perforated plate 50 provided on the internal space 522 side of the gas separation membrane 1. In this case, the thickness of the perforated plate 50 is preferably larger than the thickness of the porous layer 3, and the aperture ratio of the perforated plate 50 is preferably higher than the aperture ratio of the porous layer 3.

According to such a configuration, the mechanical strength of the perforated plate 50 is increased to satisfactorily support the gas separation membrane 1, thereby preventing the gas separation ability of the gas separation membrane 1 from being impaired.

The gas separation apparatus 5 according to the embodiment includes the gas separation membrane 1 according to the embodiment, the housing 52, and the exhaust unit 54. The housing 52 fixes the gas separation membrane 1. The internal space 522 is formed on the porous layer 3 side of the gas separation membrane 1 of the housing 52. The exhaust unit 54 reduces the pressure in the internal space 522 such that the internal space 522 has a negative pressure with respect to the external space 524 on the separation layer 2 side of the gas separation membrane 1.

According to such a configuration, the gas separation apparatus 5 having excellent carbon dioxide separation performance can be implemented.

Although the gas separation membrane and the gas separation apparatus according to the present disclosure have been described above based on the preferred embodiment, the present disclosure is not limited thereto.

For example, the gas separation membrane and the gas separation apparatus according to the present disclosure may be an apparatus in which each unit of the above-described embodiment is replaced with a constituent having substantially the same function, or may be an apparatus in which any constituents are added to the above-described embodiment.

### Examples

Next, specific examples of the present disclosure will be described.

### 5. Preparation of Gas Separation Membrane

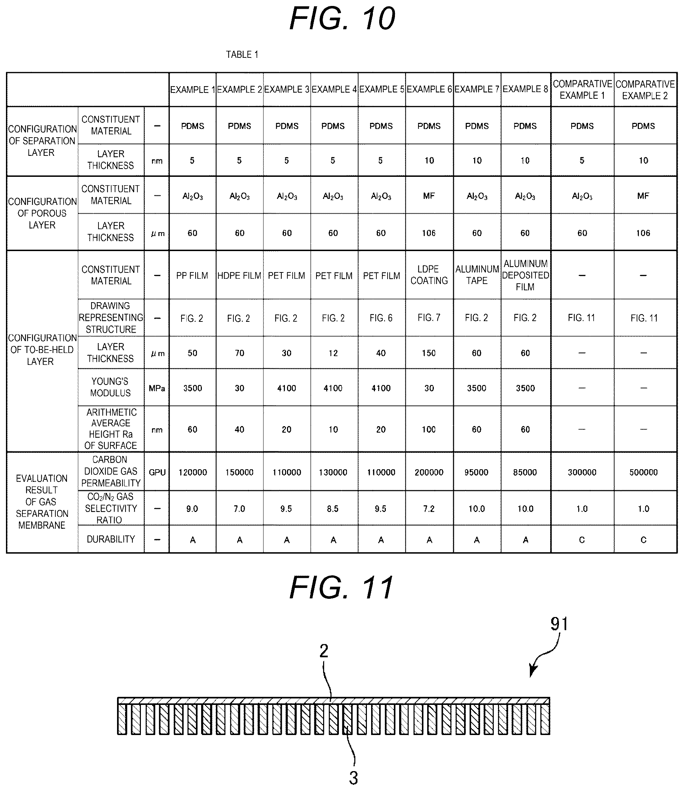

FIG. 10 is Table 1 illustrating configurations of gas separation membranes and evaluation results of gas separation membranes in Examples and Comparative Examples.

### 5.1. Example 1

First, a porous layer was prepared. Next, a raw material liquid was spin-coated to come into contact with the porous layer to obtain a coating film. As the raw material liquid, a liquid containing a prepolymer of polydimethylsiloxane was used.

Next, a surface of the coating film was irradiated with ultraviolet light having a wavelength of 365 nm for 1 hour. Accordingly, the coating film was cured to form a separation layer.

Next, a to-be-held layer was bonded to a portion of an upper surface of the porous layer outside the separation layer.

### 5.2. Examples 2 to 8

A gas separation membrane was obtained in the same manner as in Example 1 except that a configuration of the gas separation membrane was changed as shown in Table 1 (FIG. 10).

Table 1 shows constituent materials and layer thicknesses of a separation layer, a porous layer, and a to-be-held layer, a drawing representing a structure of the to-be-held layer, a Young's modulus, and an arithmetic average height Ra of the surface.

The abbreviations for the constituent materials shown in Table 1 correspond to the following materials.
PDMS: polydimethylsiloxane
Al₂O₃: porous alumina membrane filter
MF: membrane filter made of regenerated cellulose
PP: polypropylene
HDPE: high-density polyethylene
LDPE: low-density polyethylene
PET: polyethylene terephthalate

### 5.3. Comparative Examples 1 and 2

A gas separation membrane was obtained in the same manner as in Example 1 except that a configuration of a gas separation membrane was changed as shown in Table 1 (FIG. 10) and a to-be-held layer was omitted.

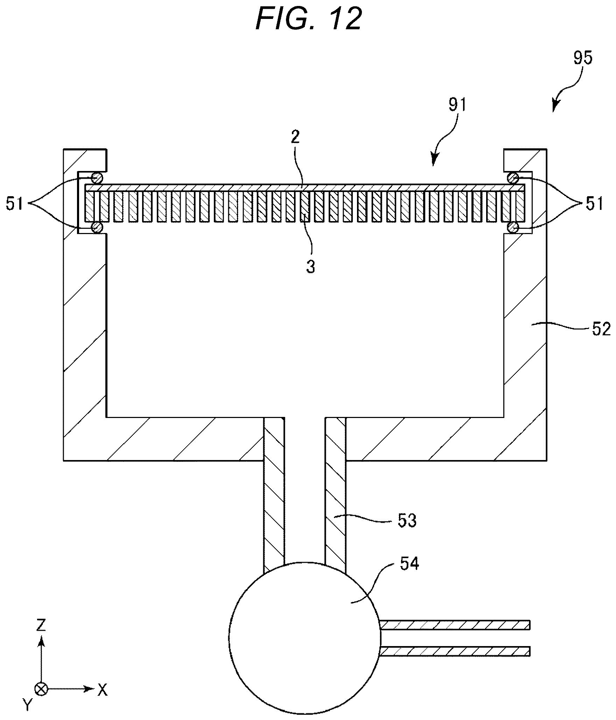

The structure of the gas separation membranes in Comparative Examples 1 and 2 is as shown in FIG. 11. A method of assembling the gas separation membrane illustrated in FIG. 11 to the gas separation apparatus is as shown in FIG. 12.

FIG. 11 is a cross-sectional view illustrating a gas separation membrane 91 in Comparative Examples 1 and 2. FIG. 12 is a cross-sectional view illustrating a schematic configuration of a gas separation apparatus 95 to which the gas separation membrane 91 illustrated in FIG. 11 is assembled. In FIGS. 11 and 12, the configurations same as those in the above-described embodiment are denoted by the same reference numerals.

As illustrated in FIG. 12, in the gas separation membrane 91 in Comparative Examples 1 and 2, a laminated portion of the porous layer 3 and the separation layer 2 is sandwiched and sealed with the sealing portions 51.

### 6. Evaluation of Gas Separation Membrane

The gas separation membranes in Examples and Comparative Examples were evaluated as follows.

### 6.1. Carbon Dioxide Gas Permeability

The gas separation membranes in Examples and Comparative Examples were set in a gas permeability measurement apparatus. At this time, for the gas separation membranes in Examples, the to-be-held layer was sandwiched between the sealing portions as illustrated in FIG. 1. For the gas separation membranes in Comparative Examples, as illustrated in FIG. 12, the laminated portion of the porous layer and the separation layer was sandwiched with the sealing portions.

Next, a mixed gas obtained by mixing carbon dioxide: nitrogen at a volume ratio of 5:95 was supplied to a side upstream of the gas separation membrane. At this time, a total upstream pressure was adjusted to 1.2 atm, a flow rate of the mixed gas was adjusted to 500 mL/min, and a temperature was adjusted to 40°C. A gas permeability was measured according to a gas permeability test method (Part 1: differential pressure method) specified in JIS K 7126-1:2006. As the gas permeability measurement apparatus, GTR-11A/31A manufactured by GTR TEC Corporation was used. In the apparatus, gas that permeated the test sample is introduced into a gas chromatograph, and the gas permeability of each component is measured.

Next, the gas permeability of carbon dioxide in each gas separation membrane was calculated from the analysis result. Calculation results are shown in Table 1.

### 6.2. CO₂/N₂ Gas Selectivity Ratio

The gas permeability of nitrogen in the gas separation membrane was calculated from the above-described analysis result. A ratio of the gas permeability of carbon dioxide to the gas permeability of nitrogen was calculated as the CO₂/N₂ gas selectivity ratio. Calculation results are shown in Table 1.

### 6.3. Durability

The gas separation membrane for which the gas permeability was measured was taken out from the gas permeability measurement apparatus, and the presence or absence of damage was confirmed by magnification observation. A scanning electron microscope was used for magnification observation. Observation results were evaluated in view of the following evaluation criteria. Evaluation results are shown in Table 1.
A: No damage was observed in the gas separation membrane.
C: Damage was observed in the gas separation membrane.

As is clear from Table 1, the gas separation membranes in Examples had high gas permeability and high gas selectivity ratio for carbon dioxide, and could prevent the occurrence of damage.

On the other hand, the gas separation membranes in Comparative Examples were found to be damaged. A high gas permeability and a low gas selectivity ratio were obtained. This result is considered to be due to loss of gas separation ability due to breakage of the separation layer.

## Claims

1. A gas separation membrane for permeating and separating a predetermined component from a mixed gas, the gas separation membrane comprising:
a porous layer which is porous;
a separation layer provided on one surface of the porous layer and formed of a polymer material; and
a to-be-held layer provided outside the separation layer on one surface of the porous layer, thicker than the separation layer, and having a gas permeability of the predetermined component lower than a gas permeability of the predetermined component in the separation layer.

2. The gas separation membrane according to claim 1, wherein
in a plan view of the to-be-held layer, the to-be-held layer protrudes outward beyond an outer edge of the porous layer.

3. The gas separation membrane according to claim 1, wherein
the separation layer overlaps a part of the to-be-held layer.

4. The gas separation membrane according to claim 1, wherein
the to-be-held layer is formed of a resin film.

5. The gas separation membrane according to claim 1, wherein
the to-be-held layer is formed of a metal film.

6. The gas separation membrane according to claim 4, wherein
the to-be-held layer has a Young's modulus of 5 MPa or more and 6,000 MPa or less.

7. The gas separation membrane according to claim 4, wherein
a surface of the to-be-held layer has an arithmetic average height Ra of 5 nm or more and 200 nm or less.

8. The gas separation membrane according to claim 1, wherein
a constituent material of the porous layer is an organic porous material.

9. The gas separation membrane according to claim 1, wherein
a constituent material of the porous layer is an inorganic porous material.

10. The gas separation membrane according to claim 1, wherein
the predetermined component is carbon dioxide.

11. A gas separation apparatus comprising:
the gas separation membrane according to claim 1;
a housing configured to hold the to-be-held layer to form an internal space located on a side opposite to an external space via the gas separation membrane; and
an exhaust unit configured to reduce a pressure in the internal space such that the internal space has a negative pressure with respect to the external space.

12. The gas separation apparatus according to claim 11, further comprising:
a perforated plate provided on an internal space side of the gas separation membrane, wherein
a thickness of the perforated plate is larger than a thickness of the porous layer, and
an aperture ratio of the perforated plate is higher than an aperture ratio of the porous layer.
